# EUROPEAN PATENT SPECIFICATION

(11) **EP 0 354 817 B1**
(45) Date of publication and mention of the grant of the patent: **11.01.1995**
(21) Application number: 89308208.1
(22) Date of filing: 11.08.1989
(51) Int. Cl.: G06K 1/12, B07C 3/18, G06K 19/00

(54) **Bar code printing**
Strichkodedruck
Impression de codes à barres

(30) Priority: 12.08.1988 GB 8819172
(43) Date of publication of application: 14.02.1990
(73) Proprietor: Esselte Meto International GmbH, 64646 Heppenheim (DE)
(72) Inventor: Pettigrew, Robert Martin, Foxton Cambridgeshire (GB); Harry, Alan John, Royston Hertfordshire, SG8 6BA (GB); Nailor, Paul Robert, Finsbury Park London. N4 (DE); Adelmann, Fred, D-6930 Eberbach am Neckar (DE); Franzen, Peter, D-6932 Hirschhorn am Neckar (DE); Schoon, Juergen, D-6930 Ederbach am Neckar (DE); Geake, Vincent, Cambridge CB1 2NG (GB)
(74) Representative: Abrams, Michael John

(56) References cited:
- EP-A- 0 105 061
- GB-A- 1 294 784
- GB-A- 2 006 678
- POST OFFICE ELECTRICAL ENGINEERS JOURNAL. vol. 62, no. 2, July 1969, LONDON GBpages 120 - 124; forster: "luminescent materials used in postal automation "

## Description

This invention relates to bar code printing.

Bar codes are now widely used for ready identification of products at goods-in and check-out locations associated, for example, with retail trading. They facilitate the use of fully automatic in-and-out systems and, in some instances, do away with the need for price labels on the products. Many supermarkets stock 25,000 to 30,000 items for sale, however, and do not have sufficient shelf space to allocate all of these items to a particular position; as a result, even if there is a bar code on such products, there is still a need for price marking. Nevertheless, the use of a bar code scanning system to identify the goods may reduce labour requirements significantly and thus produce considerable savings.

In supermarkets, typically 95 - 96% of food items going through the check-out have a bar code already printed at source by the manufacturer. For non-food items, the number of products bar coded at source is typically 80 - 85% of those going through the check-out.

In order to apply price labels to items already carrying a bar code, and to add a bar code to those products which are not coded at source, it is common for a retail outlet to use one or more label printers. These may be hand-held or fixed in position. Typically, three stationary printers may be used by up to ten people. Strips of labels will be printed and taken to the product and either applied by hand or with a dispenser. Some retailers consider that it is more economical for each operative to have his own hand-held bar code label printer.

If a national bar code has been allocated to a given product, this will normally be used by the retailer if no manufacturer's bar code is present. For products where no such national bar code has been allocated, it is up to the retailer to decide on his own bar code number. Typically, this number might be based on the numbering system used by the retailer before the introduction of bar code scanning to his store. In practice, the person generating bar codes with a printer will have with him source material which indicates the nature of the bar code for each product where a label is required.

Hand-held labelling machines typically comprise a housing which is arranged to store a label supply roll; a printing unit; and a keyboard for inputting data. When such a machine is used to print bar code labels, an operative will input the bar code number via the keyboard, which then activates a label feed mechanism and the printing unit to apply the requested bar code to one of the labels on the supply roll. After the bar code has been printed, the label feed mechanism moves the supply roll so that the printed label is accessible for application to the appropriate goods item.

Packaging materials vary widely in the nature of the material from which they are fabricated, in background colour and in finish. Current bar codes are in the form of black indicia on a white background. These factors encourage the use of labels which provide a background which is uniform in quality and colour.

While the use of labels as a vehicle to carry bar codes is, in many instances, convenient and effective, nevertheless there are certain situations in which this standard technique causes problems. For example, many items are packaged in small units with substantially all of their exterior surface carrying graphics displays and consumer information. In such cases, the application of a label may obscure data which is intended to be displayed. Printing a bar code onto a label necessitates transfer of the label to the goods; when dealing with a large volume of products, the label transfer step makes a significant contribution to the overall time involved in the labelling exercise, and consequently contributes to the overall cost involved in generating and applying bar code labels.

GB-A-1 294 784 teaches contrast code marking of packets by application of a background substrate followed by application of a contrasting code mark.

We have perceived that there is a need for a system which permits bar codes to be printed directly onto product packaging without using an adhesive label as an intermediate support. Accordingly, the present invention provides a method of applying a bar code to a product, wherein the bar code is printed directly onto packaging material associated with the product, the ink used to produce the bar code being such that indicia constituting the bar code can be discriminated regardless of the background onto which the bar code is printed, and wherein the mean albedo of an area of the packaging is measured, and either matt or gloss ink is selected according to this measurement.

In one embodiment, a matt ink is used to generate bar code indicia, and the bar code is printed directly onto a glossy area of packaging material. In this way, the matt ink provides a machine-detectable reflective contrast between indicia of the bar code regardless of any change in ground colour of the packaging. A variant of this embodiment is to use a gloss ink on a matt multi-coloured area of packaging material.

In another embodiment, the ink used to generate bar code indicia possesses chromaticity at the extremes of the visible spectrum or in the infra-red or ultraviolet regions of the spectrum. In this embodiment, the "colour" of the ink is either invisible to the human eye or (by virtue of its being at the extremes of the visible spectrum) is barely distinguishable over the background colour of the packaging material.

In a third embodiment of the invention, a bar code application unit is used which is capable of printing two distinct colours - for example, black and white - so that the colour of the packaging material onto which the bar code is directly printed does not affect readability of the bar code. This may be useful where the packaging material is transparent.

In all of the embodiments described above, direct bar code printing is beneficial since the location of the bar code in relation to the packaging material does not need to be carefully selected.

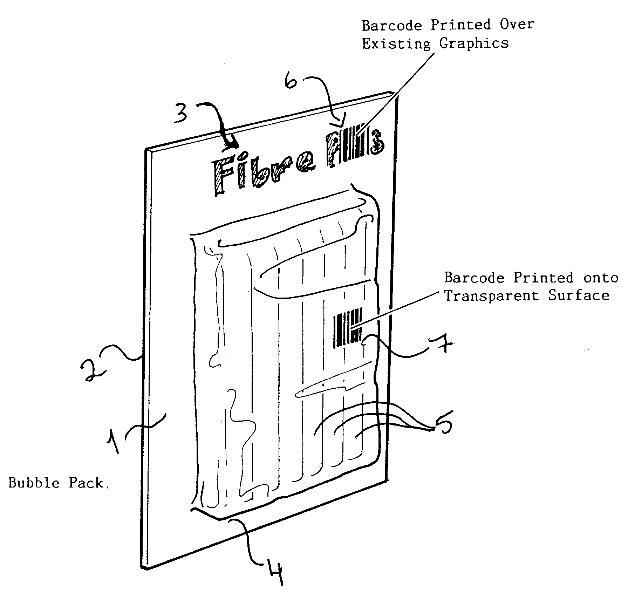

For a better understanding of the invention, and to show how the same may be carried into effect, reference will now be made, by a way of example, to the accompanying drawing which illustrates the application of bar codes to a pack of fibre pens.

Referring to the drawing, a pack 1 comprises a backing material 2 carrying identification printing 3 and covered with a bubble pack 4 within which fibre pens 5 are retained. For purposes of illustration, the location of two bar codes 6 and 7 is shown in the drawing. Bar code 6 is positioned over the printing 3, and is machine-readable despite the varying contrast and/or colours of the background. Bar code 7 is printed directly onto the transparent surface of bubble pack 4, and again can be read by machine regardless of the nature of the surface onto which it is applied and regardless of any colours and/or contrast edges behind the transparent surface. Although for ease of depiction the bar codes 6 and 7 are shown as optically dense regions, it will be appreciated that the visual impact of the bar codes may be minimal. For example, bar code 6 could be generated using infra-red-absorptive ink which would not obscure the printing over which it was applied. To enable a sales assistant to determine the location of such an "invisible" bar code, a prearranged location may be agreed as a standard location for the product in question, or the bar code may be accompanied by a location symbol, for example a white dot.

The bar code 7 may be formed by use of black and white inks to generate the bar code indicia. With a location such as that indicated for bar code 7, obliteration of material behind the bar code is not of particular importance.

## Claims

1. A method of applying a bar code (6,7) to a product (1), wherein the bar code (6,7) is printed directly onto packaging material (4) associated with the product (1), the ink used to produce the bar code (6,7) being such that indicia constituting the bar code (6,7) can be discriminated regardless of the background onto which the bar code (6,7) is printed, and wherein the mean albedo of an area of the packaging (4) is measured, and either matt or gloss ink is selected according to this measurement.

2. A method according to claim 1, wherein the ink used to generate bar code indicia possesses chromaticity at the extremes of the visible spectrum or in the infra-red or ultra-violet regions of the spectrum.

3. A method according to claim 1, wherein a bar code application unit is used which is capable of printing two distinct colours.

## Patentansprüche

1. Verfahren zum Anbringen eines Barcodes (6,7) auf einem Produkt (1), wobei
der Barcode (6,7) direkt auf das zum Produkt (1) gehörende Verpackungsmaterial (4) gedruckt wird,
die zum Erzeugen des Barcodes (6,7) verwendete Tinte so gestaltet ist, daß die den Barcode (6,7) bildenden Kennzeichnungen unabhängig vom Hintergrund unterscheidbar sind, auf den der Barcode (6,7) gedruckt ist, und
die mittlere Rückstrahlung eines Bereichs der Verpakkung (4) gemessen wird und entsprechend dieser Messung matte oder glänzende Tinte gewählt wird.

2. Verfahren nach Anspruch 1, wobei die zum Erzeugen der Barcodekennzeichnungen verwendete Tinte Farbanteile an den Enden des sichtbaren Spektrums oder in infraroten oder ultravioletten Bereichen des Spektrums besitzt.

3. Verfahren nach Anspruch 1, wobei eine Barcode-Aufbringeinheit verwendet wird, die zum Drucken von zwei verschiedenen Farben geeignet ist.

## Revendications

1. Procédé d'application d'un code à barres (6, 7) sur un produit (1), suivant lequel le code à barres (6, 7) est imprimé directement sur une matière d'emballage (4) associée au produit (1), l'encre utilisée pour produire le code à barres (6, 7) étant telle que les signes constituant le code à barres (6, 7) puissent être distingués quel que soit le fond sur lequel le code à barres (6, 7) est imprimé, et suivant lequel l'albedo moyen d'une surface de l'emballage (4) est mesuré et soit une encre mate, soit une encre brillante est choisie en fonction de cette mesure.

2. Procédé selon la revendication 1, suivant lequel l'encre utilisée pour former les signes du code à barres a une chromaticité qui se trouve aux extrémités du spectre visible ou dans les régions de l'infrarouge ou de l'ultraviolet du spectre.

3. Procédé selon la revendication 1, suivant lequel une unité d'application du code à barres qui est capable d'imprimer deux couleurs distinctes est utilisée.
